(19) Europäisches Patentamt
European Patent Office
Office européen des brevets

(11) EP 3 708 855 A1

(12) EUROPEAN PATENT APPLICATION

(43) Date of publication:
16.09.2020 Bulletin 2020/38

(51) Int Cl.:
F16B 33/06 (2006.01)   F16B 4/00 (2006.01)
B64D 45/02 (2006.01)   F16B 35/04 (2006.01)
F16B 5/02 (2006.01)

(21) Application number: 19183809.3

(22) Date of filing: 02.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.03.2019 US 201962819001 P

(71) Applicant: Roller Bearing Company of America,
Inc.
Oxford, CT 06478 (US)

(72) Inventors:
• Cowles, John H. Jr.
Unionville, CT 06085 (US)
• Swartley, Curtis
Torrington, CT 06790 (US)
• Houle, Charles
Thomaston, CT 06787 (US)
• Smith, Phil
Harwinton, CT 06791 (US)

(74) Representative: AWA Denmark A/S
Strandgade 56
1401 Copenhagen K (DK)

(54) BOLT INTERFACE COATING AND THREAD TRANSITION GEOMETRY FOR SLEEVED FASTENERS USED IN COMPOSITE APPLICATIONS

(57) A bolt for an interference fastener and a fastener system is provided. The bolt (80) has a body extending axially between a first end (80A) and a second end (80B). The body has a threaded area (82) extending axially inward from the second end (80B) and a head (85) configured on the first end (80A). A cylindrical expansion area (84) extends axially between the head (85) and the transition area (181T, 181T', 182T, 183T, 184T, 185T, 186T, T, T', T"). The transition area is disposed axially between the cylindrical expansion area (84) and the threaded area (82).

FIG. 1

**Description**

**CROSS REFERENCE TO RELATED APPLICATIONS**

This application claims the benefit of U.S. Provisional Patent Application Serial No. 62/819,001 filed on March 15, 2019, which is incorporated herein by reference in its entirety.

**FIELD OF THE INVENTION**

The present invention relates generally to bolts having thread transition geometries for interference fasteners used in various substrates (e.g. metallic, plastic, and composite substrates). More particularly, the invention relates to bolts including stress reduction features configured to reduce damage to a sleeved fastener and to the bore of a substrate when installed in an expandable sleeved fastener. Such stress reduction features can include bolts having coatings and having a stress reducing transition region between a threaded portion and a non-threaded portion.

**BACKGROUND OF THE INVENTION**

Interference fit fastener systems generally include a sleeve for insertion into a bore of a substrate and a bolt that extends through the sleeve and bore. A force is applied to the bolt to draw the bolt into the sleeve thereby expanding the sleeve creating an interference fit in the bore. The sleeve is typically installed into the composite structure bore either with an interference fit or a slip fit. The bolt is then inserted into the sleeve. The bolt-sleeve interface is an interference fit. As the sleeve expands over the bolt, resulting from the interference fit, it comes into contact with the composite structure. This contact effectuates load transfer from the fastener to the structure, which reduces the possibility of arcing between the sleeve and the composite structure.

Prior art bolt and sleeve fasteners, such as those disclosed in US Patent Number 7,695,226 to March et al., have a variety of tapered head designs. The fasteners disclosed in US 7,695,226 all have shanks that extend from flush or protruding heads of the fastener to a transition portion 55. "The transition portion 55 has a shallow lead-in angle that reduces the force that is needed for installation. Since less force is needed to install the fastener 10 into the interference condition, the fastener 10 allows for much longer grip lengths while diminishing sleeve stretch and premature sleeve failure." US 7,695,226, col. 5, lines 55-60. The disclosed sleeve members have "a generally uniform tubular portion 80 that terminates in an enlarged flanged shaped head 85 to receive the flush head 37 or protruding head 35 of the pin member 15." US 7,695,226, col. 4, lines 56-59. Prior art sleeves, such as those disclosed in US 7,695,226, do not conform to the entirety of the outer surface of the bolts and clearly do not conform to any transition areas on such bolts.

Prior art fasteners have been known to cause damage to the sleeve and may also cause irregular expansion of the sleeve, causing inefficient load transfer and damage to the composite structure. Thus, there is a need for improved sleeved fastener systems for use in various substrates.

**SUMMARY**

There is disclosed herein, a bolt for an interference fastener. The bolt includes a body extending axially between a first end and a second end. The body has a threaded area extending axially inward from the second end and a head configured on the first end. A cylindrical expansion area extends axially between the head and the threaded area. A transition area is disposed axially between the cylindrical expansion area and the threaded area.

In one embodiment, the transition area is tapered at a transition angle θ.

In one embodiment, the transition area includes a linear portion and a convex radiused portion. The linear portion is tapered at a transition angle θ and the convex radiused portion has a radius R.

In some embodiments, the transition area includes a continuous radiused portion.

In some embodiments, the transition area has a transition length L'. The transition length L' is configured to include a surface defined by a logarithmic profile.

In some embodiments, the logarithmic profile is determined by the equation:

$$y(x) = \frac{A_1}{L_{90}} \ln\left[\frac{1}{1-\left(\frac{x}{L_{90}}\right)^2}\right] \tag{1}$$

In some embodiments, the transition area includes a first transition area and a second transition area. The first transition area has a first radius R1 extending a first axial length L1 between the cylindrical expansion area and the second transition area. The second transition area has a second radius R2 extending a second axial length L2 between the first transition area and the threaded area.

In some embodiments, the second radius R2 is smaller in magnitude than the first radius R1.

In some embodiments, the transition geometry has three transition areas. The first transition area is linear and has a first transition angle $\theta'$ between the cylindrical expansion area and the beginning of the transition area. The second transition area is a radius that is tangent to the first transition area. The third transition area is linear and has a second transition angle $\theta''$ between the second transition area and the threaded region. The total transition angle $\theta = \theta' + \theta''$.

In another aspect of the present invention, an interference fastener system is further disclosed. The fastener system includes an expandable sleeve having a hollow elongate stem extending axially between an insertion end and a head portion. The elongate stem has an inside surface and an outside surface. The expandable sleeve is sized to be installed in a bore of a substrate. A bolt has a body extending axially between a first end and a second end. The body has a threaded area extending axially inward from the second end and a head arranged on the first end. A cylindrical expansion area extends axially between the head and the threaded area. A transition area is disposed axially between the cylindrical expansion area and the threaded area. The bolt is pushed or pulled through the sleeve, expanding the sleeve. Then the nut is tightened to fix the bolt in place. In some embodiments, the nut is swaged over the threaded area of the bolt.

In one embodiment of the interference fastener system, the transition area is tapered at a transition angle $\theta$. The transition angle $\theta$ is defined as the angle between the threaded area and the cylindrical expansion area.

In some embodiments, the transition angle $\theta$ is greater than about 20 degrees.

In certain embodiments, the transition angle $\theta$ is between about 25 degrees and about 60 degrees.

In some embodiments, the bolt is coated with a lubricant.

In a particular embodiment, the bolt has a first coating disposed on the body, and a second coating is disposed on the first coating.

In some embodiments, the first coating is a galvanic corrosion resistant coating and the second coating is a dry film lubricant.

## DESCRIPTION OF THE DRAWINGS

The drawings show embodiments of the disclosed subject matter for the purpose of illustrating the invention. However, it should be understood that the present application is not limited to the precise arrangements and instrumentalities shown in the drawings, wherein:

FIG. 1 is a perspective view of a bolt according to the present invention;
FIG. 2A is a partial cross sectional view of one embodiment of the transition area of detail A as shown in FIG. 1;
FIG. 2B is an alternate embodiment of the transition area depicted in FIG. 2A;
FIG. 3 is a partial cross sectional view of an alternative embodiment of the transition area of detail A as shown in FIG. 1;
FIG. 4 is a partial cross sectional view of another alternative embodiment of the transition area of detail A as shown in FIG. 1;
FIG. 5 is a partial cross sectional view of yet another alternative embodiment of the transition area of detail A as shown in FIG. 1;
FIG. 6 is a partial cross sectional view of another alternative embodiment of the transition area of detail A as shown in FIG. 1;
FIG. 7 is a cross sectional view of an expandable sleeve according to the present invention;
FIG. 8 is an isometric view of an axial cross sectional view of a bolt of FIG. 1 and the sleeve of FIG. 7;
FIG. 9 is a partial axial cross sectional view of a bolt and sleeve of FIG. 7 installed in a substrate;
FIG. 10A is a perspective view of a bolt according to FIG. 1 including a first and a second coating; and
FIG. 10B is a perspective view of a bolt according to FIG. 1 including an alternative arrangement of a first and a second coating.

## DETAILED DESCRIPTION OF THE PREFERRED EMBODIMENT

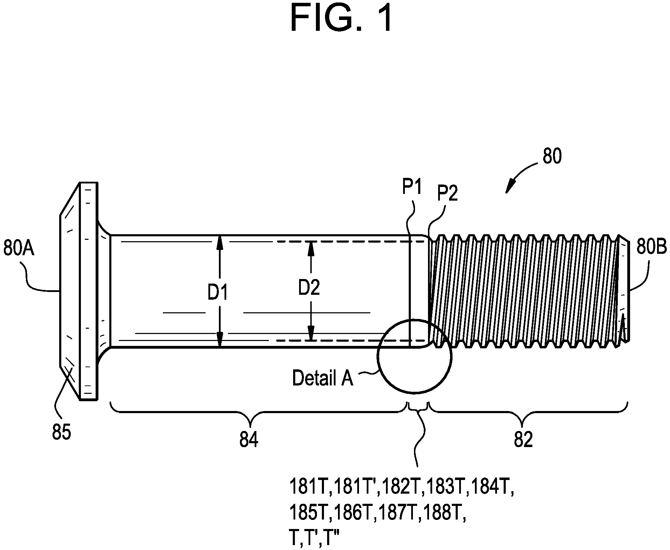

As shown in FIG. 1, a bolt 80 extends from a first end 80A to a second end 80B. The bolt 80 includes a threaded area 82 (e.g., male threads) that extends axially inward from the second end 80B and terminates between the first end 80A and the second end 80B at a point P2. The bolt 80 includes a head 85 on the first end 80A of the bolt 80. The bolt 80 has a cylindrical expansion area 84 extending from the head 85 and terminating at a point P1 at the transition area 180T. Alternative bolts with different head geometries and various threaded ends (including but not limited to tapered heads, threaded ends with "pull type" ends adjacent to the threaded ends, etc.) do not depart significantly from the invention disclosed herein.

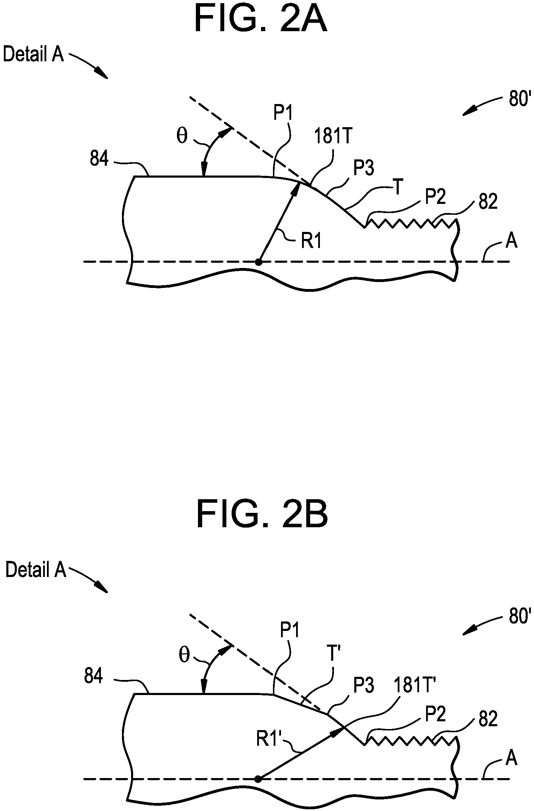

The transition area of the bolt 80 can be configured in a variety of stress relieving geometries. As shown in FIG. 2A, a transition area 181T of bolt 80' is disposed between points P1 and P2 between the threaded area 82 and the cylindrical expansion area 84. A linear transition area T extends between the transition area 181T and the threaded area 82. The transition angle θ is defined as the angle between the threaded area 82 and the cylindrical expansion area 84 as shown in FIG 2A. This transition angle θ is measured from a reference line, tangent to the transition area 181T, at the intersection of the transition area 181T and the threaded area 82. The transition area 181T includes a radiused portion with a radius R1 from points P1 to P3 and a linear transition area T from points P3 to P2. The depicted tangent reference line is colinear with the linear transition area T. As a result, the transition angle θ is the angle between the linear transition area T and the cylindrical expansion area 84. In some embodiments, the ratio of the axial length of the radiused portion 181T to axial length of the linear transition area T is between 0.5 and 1.5. FIG. 2B depicts an alternate embodiment of the bolt 80', in which the linear transition area T' is adjacent to the cylindrical expansion area 84 and the radiused transition surface 181T' is adjacent to the threaded area 82.

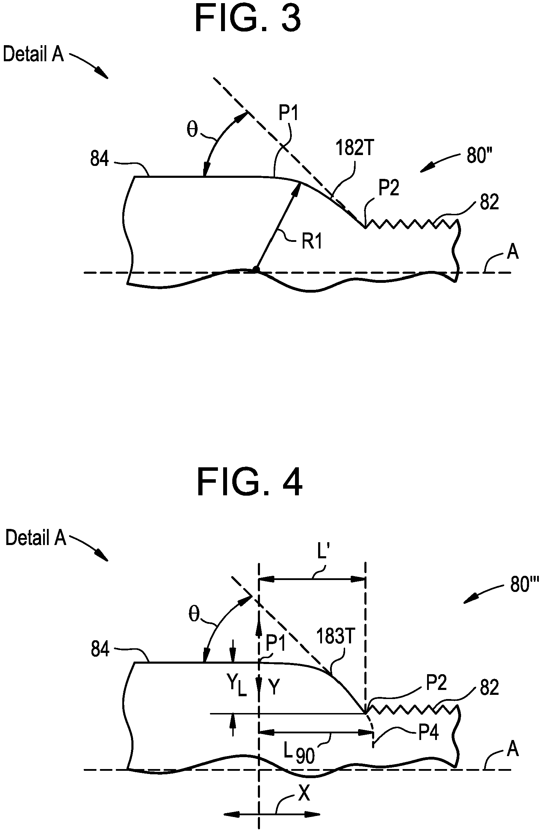

Referring to FIG. 3, a transition area 182T of bolt 80" extends from a point P1 at the cylindrical expansion area 84 to a point P2 at the threaded area 82. The transition area 182T is defined by a continuous radiused portion having a radius R1 from points P1 to P2. The depicted reference line that defines the transition angle θ is tangent to the transition area 182T at point P2.

Referring to FIG. 4, a transition area 183T of bolt 80'" is disposed between a first point P1 at the cylindrical expansion area 84 and a second point P2 at the threaded area 82. In this embodiment, the transition area 183T has logarithmic profile. A transition length L' is defined as an axial distance, measured parallel to the A axis of the bolt 80'", between the threaded area 82 and the cylindrical expansion area 84. A length $L_{90}$ is defined as an axial distance at which the transition angle θ would be equal to 90 degrees. The transition angle θ is defined as the angle measured from a tangent reference line that intersects P2 at a distance L' as shown in FIG 4. The depicted surface of the transition area 183T is defined according to the equation:

$$y(x) = \frac{A_1}{L_{90}} \ln \left[ \frac{1}{1 - \left(\frac{x}{L_{90}}\right)^2} \right] \qquad (1)$$

Where $y$ is the ordinate, being perpendicular to the A axis of the bolt 80'" directed radially inward from point P1. The values of $L_{90}$ and $A_1$ can be determined for any bolt geometry by measuring a first diameter D1, at point P1 of the cylindrical expansion area 84, and the second diameter D2, measured at point P2 between the transition area 181T-188T and the threaded area 82, as depicted in FIG. 1. Once D1 and D2 are determined, the following equations are used to calculate $A_1$ and $L_{90}$:

$$Y(L') = \frac{D1 - D2}{2} \qquad (2)$$

$$\left. \frac{dy(x)}{dx} \right|_{x=L'} = \theta \qquad (3)$$

In the depicted embodiment, P4 is where a tangent reference line to the surface of the transition area 183T would be a vertical line.

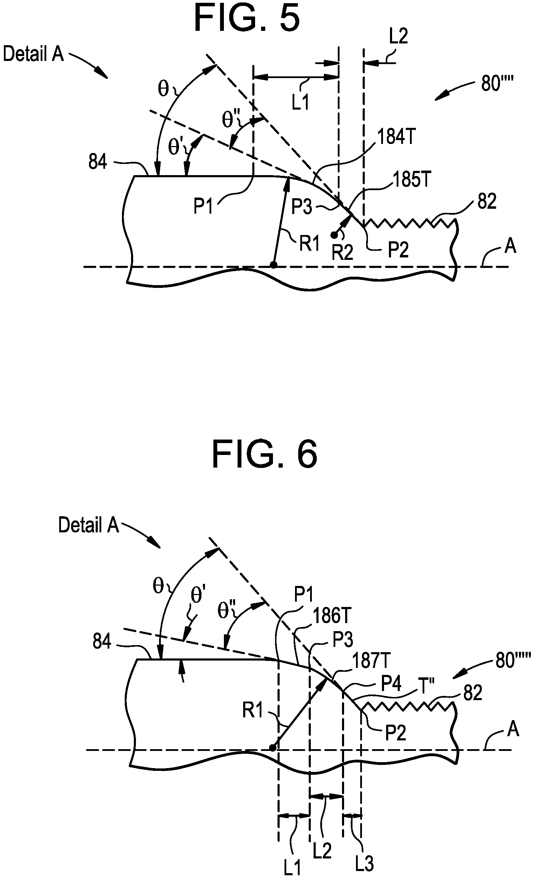

Referring to FIG. 5, a bolt 80"" has a first transition area 184T and a second transition area 185T. The first transition area 184T extends between the cylindrical expansion area 84 at point P1 and the second transition area 185T at point P3. The second transition area 185T extends between the first transition area 184T at point P3 and the threaded area 82 at point P2. The first transition area 184T is defined by a radius R1 having a first axial length L1. The second transition area 185T is defined by a radius R2 having a second axial length L2. In one embodiment, the second radius R2 is smaller than the first radius R1. In one embodiment, the ratio of the first axial length L1 to the second axial length L2 is between 1.0 and 4.0. The transition area 184T ensures that there are no abrupt changes in the angle of the surface of the bolt. A first transition angle θ' is defined between a reference line tangent to the second transition area 184T at point P3. A second transition angle θ" is defined between the reference line tangent to the first transition area 184T at point P3 and the cylindrical expansion area 84. In the depicted embodiment, the cylindrical expansion area 84 is tangent to the first transition area 184T at point P1. The total transition angle θ = θ' + θ". In some embodiments, the angle θ" varies over all the transition geometries while the angle θ varies between 20° and 60°, and is preferably between 30° and 35°.

Referring to FIG. 6, a bolt 80""' has a first transition area 186T, a second transition area 187T and a linear transition area T". The first transition area 186T extends from the cylindrical expansion area 84 from point P1 to point P3. In the depicted embodiment, the first transition area 186T defined by a line rotated about the longitudinal axis A at a first transition angle θ' relative to the cylindrical expansion area 84. The second transition area 187T is defined by an arc having a radius R1 rotated about the longitudinal axis from point P3 to point P4. The linear transition area T" extends from point P2 at the threaded area 82 to point P4. The linear transition area T" is defined by a line rotated about the longitudinal axis A at a second transition angle θ" relative to the first transition area 186T. The total transition angle θ = θ' + θ". The first transition area 186T has an axial length, measured parallel to the longitudinal axis A, of L1. The second transition area 187T has an axial length L2 and the linear transition area T" has an axial length L3. In some embodiments, θ' is between 0 degrees and 10 degrees and preferably between 2 degrees and 5 degrees.

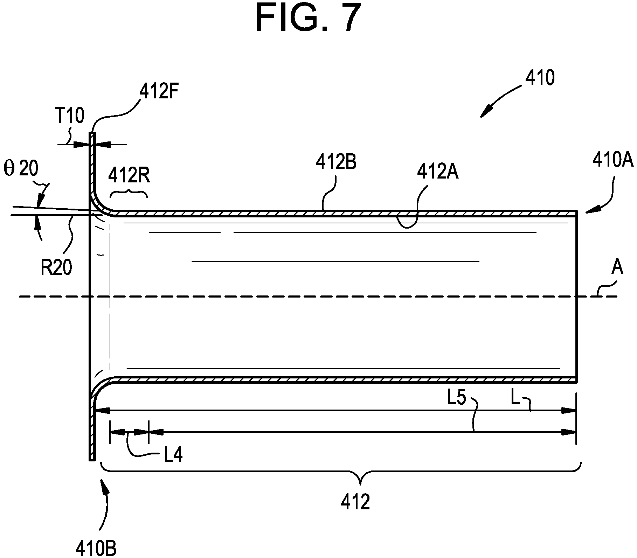

As shown in FIG. 7, an expandable sleeve 410 for an interference fastener includes a hollow elongate stem 412 extending axially between an insertion end 410A and a head portion 410B. The head portion 410B includes a flange 412F that has a thickness T10. The elongate stem 412 has an inside surface 412A, an outside surface 412B and an overall axial length L. A portion of the stem 412 has a cylindrical shape along an axial length L5 which is about 90 to 95 percent of the overall axial length L. The stem 412 includes a radially outward taper 412R (e.g., truncated conical shape) extending axially toward the head portion 410B. The taper 412R has an axial length L4, which is about 5 to 10 percent of the overall axial length L of the stem. The taper 412R forms an angle θ20 relative to a line R20 that is parallel to a longitudinal axis A.

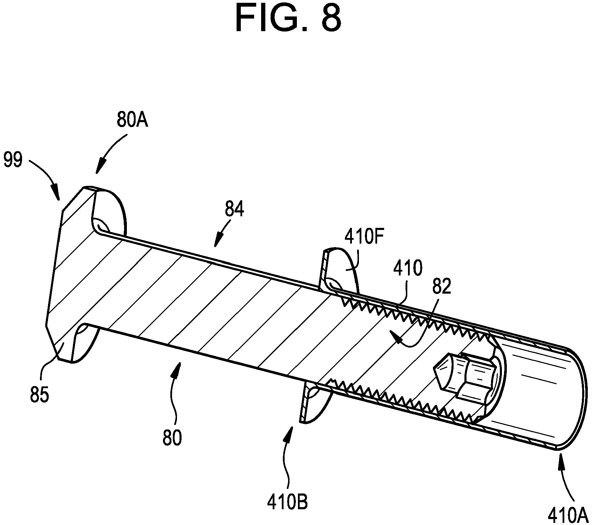

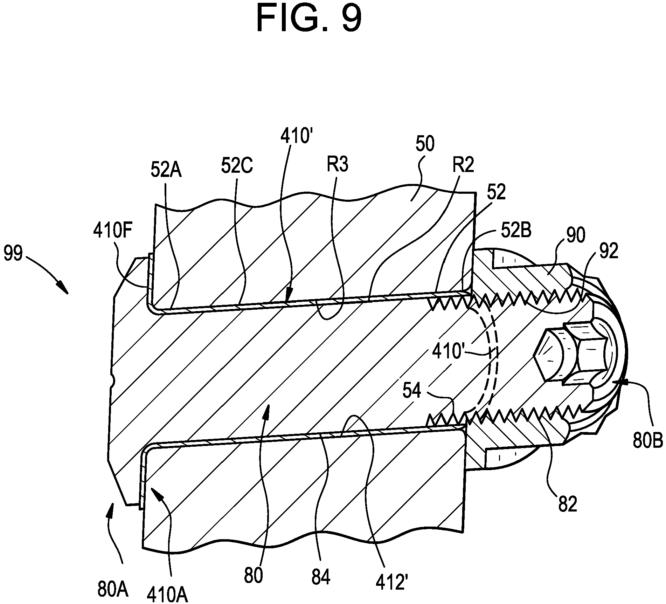

As shown in FIGS. 8-9, the present invention includes a method for assembling the interference fastener system 99 in a substrate 50. The interference fastener system includes the sleeve 410, bolt 80 and a nut 90, as shown in FIG. 9. In one embodiment, an initial step of the assembly involves sliding the sleeve 410 into a bore 52 of the substrate 50 without any lubrication thereon and without substantial frictional resistance. The insertion end 410A of the sleeve 410 is slid into the entry end 52A of the bore 52 until the flange 410F abuts the substrate 50 proximate the entry end 52A of the bore 52.

Referring to FIGS. 8 and 9, the bolt 80 is positioned for entry into the sleeve 410 and is slid into the sleeve 410 until the threaded area 82 begins to protrude out of the second end 52B of the bore 52. As shown in FIG. 9, a nut 90 that has female threads 92 is threaded onto the threaded area 82 of the bolt 80. The nut 90 is torqued onto the bolt 80 to further the expansion area 84 of the bolt 80 into the sleeve 410 and to radially expand the stem 412 into a cylindrical shape indicated by element number 410' in FIG. 9. In some embodiments, the bolt 80 is pushed or pulled through the sleeve 410, expanding the sleeve 410. Then the nut 90 is tightened to fix the bolt 80 in place. In some embodiments, the nut is swaged over the threaded area of the bolt. In some embodiments, the bolt 80 is pushed all the way into the sleeve 410 and bore 52 before torqueing the nut 90 on the bolt 80. The expansion of the sleeve 410 against the interior surface 54 of the bore 52 of the substrate 50 provides the electrical communication through the sleeve 410 to the substrate 50.

The taper 412R has utility in minimizing stresses applied to a substrate 50 when the sleeve 410 is radially expanded in the bore 52 against the interior surface 54. Thus, sleeve 410 having the taper 412R allows a cylindrical shaped stem 412 to be employed and installed in the bore 52 of the substrate 50 without lubrication and without damaging the interior surface 54 upon radial expansion of the sleeve 410. This also prevents failure of the sleeve 410 during insertion in the bore 52.

The stem 412 of the sleeve 410 is configured for uniformly distributing pressures when the sleeve 410 is expanded in a bore 52 of a substrate 50. The stem 412 also minimizes the stress in the sleeve 410 to prevent sleeve failure during insertion. The stem 412 having a radially outward conical taper 412R extending axially toward the head portion 410B is an example of a stress minimizing feature.

The sleeve 410 is configured for insertion, insertion end 410A first, into a hole or bore 52 in a substrate 50 (e.g., a substrate in an aircraft such as a panel made of a composite material), as shown in FIG. 9. The sleeve 410 is radially expanded in the bore 52 against an interior surface 54 that defines the bore 52. The tightening of the nut 90 on the bolt 80 radially expands the sleeve 410. In alternative embodiments, the sleeve 410 expands when the bolt 80 is pushed into the sleeve 410, for example a force is applied to the bolt to draw the bolt into the sleeve thereby expanding the sleeve in an interference fit in the bore.

As shown in FIG. 8, the head portion 410B of the sleeve 410 includes a flange 410F extending radially outward from the stem 412. In one embodiment, the head portion 410B is configured in a flat shape, generally perpendicular to the stem 412. While the head portion is shown and described as being a flange 410F and/or a flat shape, the present invention is not limited in this regard, as other configurations may be employed, including but not limited to a sleeve having a head portion 410B that has conical tapered shape or other shape suitable for use in any shape of countersunk hole in a substrate 50.

In one embodiment, the sleeve 410 is manufactured from an electrically conductive material, such as a stainless steel, austenitic stainless steel, A286 CRES and AMS 5525. Employing an electrically conductive material for the sleeve 410 has utility in providing electrical communication through the sleeve 410 to the substrate that the sleeve is inserted in during instances of lightning surge flow through aircraft structure, thereby mitigating electrical arcing and protecting hardware. This also allows for the static electricity to dissipate through the sleeve 410 to the substrate without the need for a ground strap.

In some embodiments, the sleeve 410 can be coated on all exposed surfaces with a lubricant 102, such as for example, cetyl alcohol or with a dry film lubricant such as graphite, molybdenum disulfide or PTFE. In some embodiments, the bolt 80 is coated with a galvanic corrosion resistant coating 104 such as an aluminum pigmented coating.

The transition areas 180T - 188T, T, T', T" and all or part of the cylindrical expansion region 84 are preferably coated with a solid dry film lubricant 102.

In some embodiments, the entire bolt 80 is coated with a second lubricant 106 such as cetyl alcohol after an aluminum pigmented coating and a dry film lubricant 102 are applied.

In some embodiments, the outside of the sleeve 410 is coated with sealant before being inserted into the bore 52.

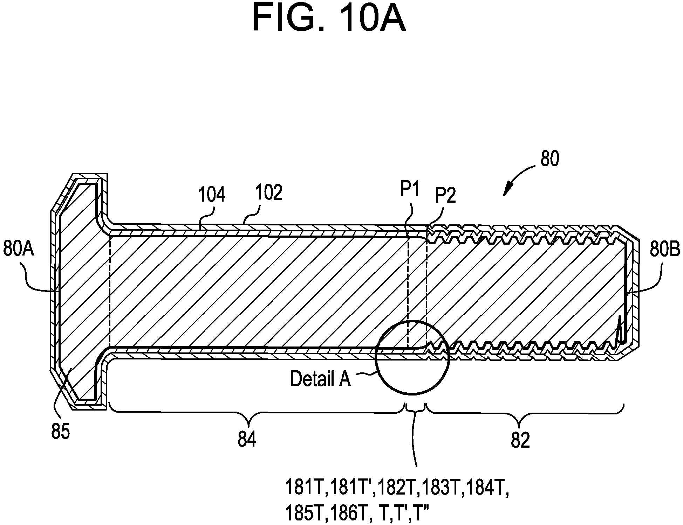

Referring to FIG. 10A, the bolt 80 is coated with a galvanic corrosion resistant coating 104. The galvanic corrosion resistant coating 104 is then coated with a solid lubricant 102 coating thus allowing for elimination of the need for a solid lubricant coating on the inside of the sleeve 410. The galvanic corrosion resistant coating 104 is optional, and may be used depending on the particular application.

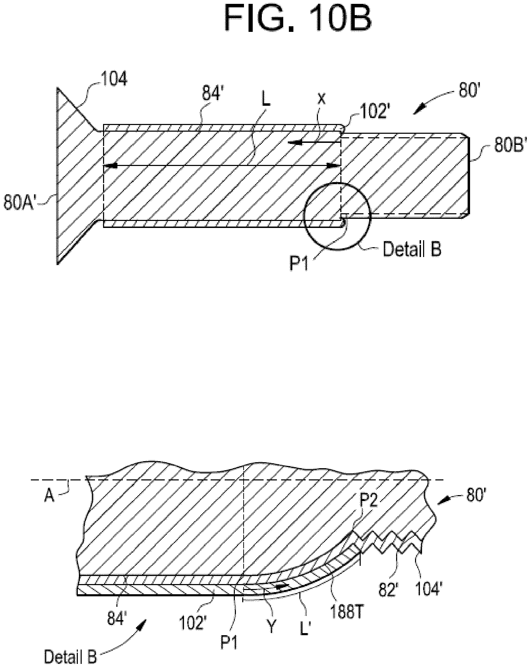

Referring to FIG. 10B, the axial length of the cylindrical area 82' is defined as L and a solid lubricant 102' is disposed on the cylindrical area 84' a distance $x$. In the depicted embodiment $x = L$. In some embodiments the ratio of $x$ to L is between 0.1 and 1.0. In detail B of FIG. 10B, the solid lubricant 102' is also disposed on the transition area 188T a distance Y. The distance Y is measured along the surface of the transition area and the total length of the surface of the transition area 188T is L'. In some embodiments, the ratio of the distance Y to the total length of the transition area 188T of L' is between 0.25 and 1.00. The lengths $x$ and Y of the coating 102' can be adjusted depending on the application. Both lengths are measured from point P1 on the transition area 188T.

In alternate embodiments, a sealant (not depicted) is substituted in place of one or both of the coatings 102, 104, 102', 104' as depicted in FIGS. 10A and 10B.

Bolts having a coating on top of an aluminum pigment coating that reduces axial (frictional) installation forces on the sleeve during installation of the bolt reduces the likelihood that the sleeve will tear and eliminates the need for any lubrication or coating on the sleeve internal diameter. Such bolts having thread transition geometries having stress reduction features unexpectedly ensure uniform expansion of the sleeve and reduce the risk of structural damage to the substrate.

Although the present invention has been disclosed and described with reference to certain embodiments thereof, it should be noted that other variations and modifications may be made, and it is intended that the following claims cover the variations and modifications within the true scope of the invention.

## Claims

1. A bolt (80, 80', 80", 80''', 80'''', 80''''') for an interference fastener (99), the bolt (80, 80', 80", 80''', 80'''', 80''''') comprising:

   a body extending axially along a longitudinal axis A between a first end (80A) and a second end (80B), the body having a threaded area (82) extending axially inward from the second end (80B) and a head portion (85) configured on the first end (80A);
   a cylindrical expansion area (84) extending axially between the head portion (85) and the threaded area (82); and
   a transition area (181T, 181T', 182T, 183T, 184T, 185T, 186T, 187T, T, T', T")) disposed axially between the cylindrical expansion area (84) and the threaded area (82);
   wherein the transition area (181T, 181T', 182T, 183T, 184T, 185T, 186T, 187T, T, T', T") is tapered at a transition angle θ and the transition angle θ being defined as an angle between the threaded area (82) and the cylindrical expansion area (84).

2. The bolt (80) of claim 1, wherein the transition area includes a linear portion (T) and a radiused portion (181T), the linear portion (T) being tapered at an angle θ and the radiused portion (181T) having a radius R1.

3. The bolt (80) of claim 2, wherein a ratio of a first axial length of the radiused portion (181T) to a second axial length of the linear portion (T) is between 0.5 and 1.5

4. The bolt (80") of claim 1, wherein the transition area includes a single continuous radiused portion (182T).

5. The bolt (80''') of claim 1, wherein the transition area (183T) is defined by a logarithmic profile according to the equation $Y(x) = (A_1/L_{90}) \ln [1/(1-(x/L_{90})^2)]$.

6. The bolt (80"", 80"''') of claim 1, wherein the transition area includes a first transition area (184T, 186T) and a second transition area (185T, 187T), the first transition area (184T, 186T) extending a first axial length L1 between the cylindrical expansion area (84) and the second transition area (185T, 187T), and the second transition area (185T, 127T) extending a second axial length L2 between the first transition area (184T, 184T) and the threaded area (82).

7. The bolt (80"") of claim 6, wherein the first transition area (184T) is defined by an arc having a first radius R1 rotated about the longitudinal axis A, the second transition area (185T) is defined by an arc having a second radius R2 rotated about the longitudinal axis A, and the first radius R1 is greater in magnitude than the second radius R2.

8. The bolt (80"", 80"''') of claim 6, wherein the ratio of the first axial length L1 to the second axial length L2 is between 1.0 and 4.0.

9. The bolt (80"''') of claim 1, wherein the transition area includes a first transition area (186T), a second transition area (187T), and a third transition area (T"); the first transition area (186T) is defined by a first line rotated about the longitudinal axis A, the first line extending from the cylindrical expansion area (84) towards the threaded area (82) at a first transition angle θ'; the second transition area (187T) is defined by an arc rotated about the longitudinal axis A, the arc having a radius R1 and extending from the first transition area (186T) towards the threaded area (82); and the third transition area (T") defined by a second line rotated about the longitudinal axis A, the second line extending from the second transition area (187T) to the threaded area (82) at a second transition angle θ"; and wherein the transition angle θ is the total of the first transition angle θ' and the second transition angle θ".

10. The bolt (80"", 80'"") of claim 6, wherein the first transition area (184T, 186T) is defined by an arc rotated about the longitudinal axis A and the second transition area (185T, 187T) is defined by a line rotated about the longitudinal axis A.

11. The bolt (80"", 80'"") of claim 6, wherein the first transition area (184T, 186T) is defined by a line rotated about the longitudinal axis A and the second transition area (185T, 187T) is defined by an arc rotated about the longitudinal axis A.

12. The bolt (80"''') of claims 10-11, further comprising a third transition area (T") between the second transition area (187T) and the threaded area (82); wherein the third transition area (T") is defined by a line rotated about the longitudinal axis A.

13. The bolt (80"''') of claims 10-11, further comprising a third transition area (T") between the second transition area (186T) and the threaded area (82); wherein the third transition area (T") is defined by an arc rotated about the longitudinal axis A.

14. An interference fastener system comprising:

an expandable sleeve (410) including a hollow elongate stem (412) extending axially between an insertion end (410A) and a head portion (410B), the elongate stem (412) having an inside surface and an outside surface, the expandable sleeve (410) being configured to be installed in a bore (52) of a substrate (50); and
a bolt (80), the bolt (80) including a body extending axially between a first end (80A) and a second end (80B), the body having a threaded area (82) extending axially inward from the second end (80B), a head portion (85) arranged on the first end (80A), a cylindrical expansion area (84) extending axially between the head portion (85) and the threaded area (82), and a transition area (80T) disposed axially between the cylindrical expansion area (84) and the threaded area (82), the bolt (80) being configured to be installed in a position abutting the inside surface of the expandable sleeve (410) with a nut (90), wherein when the nut (90) is tightened, the sleeve (410) expands uniformly in the bore (52) of the substrate (50).

15. The interference fastener system of claim 14, wherein the transition area (80T) is tapered at a transition angle θ, the transition angle θ being defined as an angle between the threaded area (82) and the cylindrical expansion area (84).

16. The bolt of claim 1 or the interference fastener system of claims 14-15, wherein the transition angle θ is greater than 20 degrees, preferably between 25 degrees and 60 degrees.

17. The interference fastener system of claims 14-16, wherein the bolt (80) is coated with a lubricant (104).

**EP 3 708 855 A1**

**18.** The interference fastener system of claims 14-17, wherein the bolt (80) has a first coating (104) disposed on the body, and a second coating (102) disposed on the first coating (102).

**19.** The interference fastener system of claim 14-18, wherein the first coating (104) is a galvanic corrosion resistant coating and the second coating (102) is a dry film lubricant.

**20.** The interference fastener system of claims 14-19, wherein the bolt (80) is coated with a sealant before it contacts the inside surface of the expandable sleeve (410).

**21.** A bolt (80"''') for an interference fastener, the bolt (80"''') comprising:

a body extending axially along a longitudinal axis A between a first end (80A) and a second end (80B), the body having a threaded area (82) extending axially inward from the second end (80B) and a head portion (85) configured on the first end (80A);
a cylindrical expansion area (84) extending axially between the head portion (85) and the threaded area (82); and
a transition area including a first transition area (186T), a second transition area (187T), and a third transition area (T") disposed axially between the cylindrical expansion area (84) and the threaded area (82), a tangent reference line of the first transition area (186T) intersecting the second transition area (187T) defines a first angle θ' relative to the cylindrical expansion area (84), a tangent reference line of the third transition area (T") intersecting the threaded area (82) defines a second angle θ" relative to the tangent reference line of the first transition area (186T);
wherein a transition angle θ is the total of the first angle θ' and the second angle θ".

**22.** The bolt for an interference fastener of claim 21, wherein at least one of the first transition area (186T), the second transition area (187T), and the third transition area (T") is defined by a line rotated about the longitudinal axis A.

**23.** The bolt for an interference fastener of claim 21, wherein at least one of the first transition area (186T), the second transition area (187T), and the third transition area (T") is defined by an arc having a radius R1 rotated about the longitudinal axis A.

8

# FIG. 1

80

P1 P2

80A

80B

D1 D2

85

Detail A

84

82

181T,181T',182T,183T,184T,
185T,186T,187T,188T,
T,T',T"

# FIG. 2A

Detail A

P1

θ

84

181T

P3

T

P2

82

R1

A

80'

# FIG. 2B

Detail A

P1

θ

84

T'

P3

181T'

P2

82

R1'

A

80'

# FIG. 3

Detail A

θ

84

P1

182T

P2

80"

82

R1

A

# FIG. 4

Detail A

L'

θ

84

P1

183T

80''''

Y_L  Y

P2  82

P4

L_{90}

X

A

# FIG. 5

Detail A

θ

θ''

θ'

L1

L2

80''''

184T

185T

84

82

P1

P3

R1

R2

P2

A

# FIG. 6

Detail A

θ

θ'

θ''

P1

186T

P3

187T

80'''''

T'''

84

P4

82

R1

P2

A

L1

L2

L3

# FIG. 7

# FIG. 8

# FIG. 9

# FIG. 10A

80

104    102         P1  P2

80A

80B

Detail A

85         84         82

181T,181T',182T,183T,184T,
185T,186T, T,T',T"

# FIG. 10B

EP 3 708 855 A1

## EUROPEAN SEARCH REPORT

**Application Number**

EP 19 18 3809

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 364 049 A1 (BOEING CO [US]) 22 August 2018 (2018-08-22) * Claim 1; Figures 1,2; Paragraph 30 * | 1-13, 16-23 | INV. F16B33/06 F16B4/00 B64D45/02 F16B35/04 F16B5/02 |
| X | US 4 048 898 A (SALTER LARRY) 20 September 1977 (1977-09-20) * Column 5, lines 37-41; Column 7, lines 40-46; Claim 13; Figures 8,9 * | 1-23 | |
| X | EP 3 364 050 A1 (BOEING CO [US]) 22 August 2018 (2018-08-22) * Claim 6; Figures 1-5; Paragraph 33 * | 1-13, 16-23 | |
| X | EP 1 133 643 A1 (HUCK INT INC [US]) 19 September 2001 (2001-09-19) * Paragraph 32; Figures 1-4; Claim 4 * | 1-13, 16-23 | |
| X | US 5 039 265 A (RATH JACK [US] ET AL) 13 August 1991 (1991-08-13) * Column 12, lines 8-28; Column 10, lines 6-28; Figures 1-4; Claim 1 * | 1-13, 16-23 | |
| X,D | US 7 695 226 B2 (ALCOA GLOBAL FASTENERS INC [US]) 13 April 2010 (2010-04-13) * Column 5, line 52 - Column 6, line 12; Column 6, lines 49-64; Claims 1,2; Figure 10 * | 1-23 | TECHNICAL FIELDS SEARCHED (IPC) F16B B64F B64D |
| X | US 2018/135683 A1 (SISCO TANNI [US] ET AL) 17 May 2018 (2018-05-17) * Paragraphs 27,28; Figure 4A * | 1-13, 16-23 | |

The present search report has been drawn up for all claims

| Place of search | Date of completion of the search | Examiner |
|---|---|---|
| Munich | 3 March 2020 | Garmendia, Ion |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 3809

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2020

| Patent document cited in search report | | Publication date | Patent family member(s) | | Publication date |
|---|---|---|---|---|---|
| EP 3364049 | A1 | 22-08-2018 | CA | 2988551 A1 | 20-08-2018 |
| | | | CN | 108457958 A | 28-08-2018 |
| | | | EP | 3364049 A1 | 22-08-2018 |
| | | | JP | 2018136021 A | 30-08-2018 |
| | | | KR | 20180096488 A | 29-08-2018 |
| | | | US | 2018238370 A1 | 23-08-2018 |
| US 4048898 | A | 20-09-1977 | NONE | | |
| EP 3364050 | A1 | 22-08-2018 | CA | 2988522 A1 | 20-08-2018 |
| | | | CN | 108457960 A | 28-08-2018 |
| | | | EP | 3364050 A1 | 22-08-2018 |
| | | | JP | 2018136022 A | 30-08-2018 |
| | | | KR | 20180096487 A | 29-08-2018 |
| | | | US | 2018238361 A1 | 23-08-2018 |
| EP 1133643 | A1 | 19-09-2001 | AT | 431908 T | 15-06-2009 |
| | | | BR | 9914865 A | 23-10-2001 |
| | | | CA | 2347974 A1 | 11-05-2000 |
| | | | CN | 1398325 A | 19-02-2003 |
| | | | EP | 1133643 A1 | 19-09-2001 |
| | | | JP | 2004504944 A | 19-02-2004 |
| | | | US | 6149363 A | 21-11-2000 |
| | | | WO | 0026546 A1 | 11-05-2000 |
| US 5039265 | A | 13-08-1991 | NONE | | |
| US 7695226 | B2 | 13-04-2010 | AT | 503935 T | 15-04-2011 |
| | | | AU | 2007216793 A1 | 10-04-2008 |
| | | | BR | PI0703097 A2 | 21-07-2009 |
| | | | CA | 2603635 A1 | 21-03-2008 |
| | | | CN | 101153623 A | 02-04-2008 |
| | | | DE | 202007019163 U1 | 05-01-2011 |
| | | | DE | 202007019651 U1 | 02-12-2014 |
| | | | EP | 1903221 A2 | 26-03-2008 |
| | | | ES | 2361197 T3 | 14-06-2011 |
| | | | JP | 5044344 B2 | 10-10-2012 |
| | | | JP | 2008075876 A | 03-04-2008 |
| | | | JP | 2012189222 A | 04-10-2012 |
| | | | KR | 20080027210 A | 26-03-2008 |
| | | | US | 2008075555 A1 | 27-03-2008 |
| | | | US | 2010278616 A1 | 04-11-2010 |
| | | | US | 2014056664 A1 | 27-02-2014 |
| | | | US | 2016097418 A1 | 07-04-2016 |
| | | | WO | 2008036666 A2 | 27-03-2008 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 19 18 3809

03-03-2020

| Patent document cited in search report | | Publication date | Patent family member(s) | | Publication date |
|---|---|---|---|---|---|
| US 2018135683 | A1 | 17-05-2018 | ES | 2733479 T3 | 29-11-2019 |
| | | | JP | 6596050 B2 | 23-10-2019 |
| | | | JP | 2018128135 A | 16-08-2018 |
| | | | PT | 3321523 T | 27-06-2019 |
| | | | RU | 2017131250 A | 05-03-2019 |
| | | | TR | 201909487 T4 | 22-07-2019 |
| | | | US | 2018135683 A1 | 17-05-2018 |
| | | | US | 2020049187 A1 | 13-02-2020 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62819001 A

- US 7695226 B, March